# EUROPEAN PATENT SPECIFICATION

(11) **EP 1 357 764 B1**
(45) Date of publication and mention of the grant of the patent: **30.07.2008**
(21) Application number: 02360128.9
(22) Date of filing: 23.04.2002
(51) Int. Cl.: H04Q 7/22

(54) **A method for a treatment of short messages in a communications network, a short message server and a communications network therefor**
Verfahren zur Behandlung von Kurznachrichten in einem Kommunikationsnetzwerk, ein Kurznachrichtenserver und ein Kommunikationsnetzwerk dafür
Procédé pour le traitement de messages courts dans un réseau de communications, un serveur de messages courts et un réseau de communications associés

(43) Date of publication of application: 29.10.2003
(73) Proprietor: Alcatel Lucent, 75008 Paris (FR)
(72) Inventor: Münch, Rainer, 71706 Markgröningen (DE)
(74) Representative: Schmidt, Werner Karl

(56) References cited:
- WO-A-02/13489
- WO-A-97/41654
- US-B1- 6 289 223

## Description

The invention relates to a method for a treatment of short messages according to the preamble of claim 1, a short message server according to the preamble of claim 9 and a communications network according to the preamble of claim 10.

The existing so-called Short Message Service (SMS) is a supplementary communication service in present mobile telecommunication networks to enable users to exchange short messages of a limited size. The short message service realised in the GSM (Global System for Mobile Communication) is defined in the ETSI (European Telecommunications Standards Institute) standard ETS 300 536.

Normally, a short message comprises a text message with a limited number of characters. In the GSM, e.g., a single short message can comprise a text with up to 160 characters for 7 bit coded characters or 140 characters for 8 bit coded characters. Each character may represent a letter, a number or further defined symbol. However, even non-text based short messages (e.g. information in binary format) may be supported.

In the sense of the invention, any kind of digital messages to be treated in a communications network by similar means as further described should be understood as short message. Especially, messages in services known as Multi Media Services (MMS) or Enhanced Media services (EMS) for existing and future mobile and fixed networks are regarded as short messages in the sense of this invention.

The short message service is realised as so-called store and forward service, wherein short messages are not sent directly from a sender to a recipient, but sent via an SMS centre (SMSC) instead. Each mobile communications network, that supports the defined short message service SMS has one or more SMS centres to control the exchange of short messages.

US patent US 6,289,223 B1 discloses a system and method for transmission of SMS messages to predefined usergroups containing at least one mobile unit by means of mobile station ISDN numbers (MSISDN) that are assigned to user groups. Allowances are made to restrict such transmission to specified originating units.

International patent application WO 97/41654 discloses a system and method for disseminating information in the form of an SMS text message from an information source via a message distribution centre to a subscriber in accordance with a customer-defined profile of the subscriber.

The short message service was made available for fixed network users, not long ago, using bearer channels. There, short messages are handled in a similar way as normal telephone calls and thus considerably blocking network resources. Thus, an internally known idea is to exchange short messages over signalling channels of the user network interfaces (e.g. the ISDN D-channels) between the terminals and a digital fixed network, especially the ISDN (Integrated Services Digital Network) and the signalling network (e.g. the ISDN signalling system No 7) within said fixed network, that enables for providing a short messages service with similar properties like the existing short message services in mobile networks.

According to said internally known idea, an integration of a short message service as service feature within the ISDN is realised. Therefore, a corresponding data container is to be generated, wherein a terminal puts in a short message, the data container comprising the necessary information for routing said data container to appropriate short message serving nodes. The definition of a protocol necessary for said service is not part of this invention, but, referring to fixed networks, a realisation of such a service and the corresponding service infrastructure will be assumed here.

In ITU-T Recommendations Q.731, clause 7, issued by the International Telecommunication Union, Sector Telecom, a so-called Calling Line Identification Restriction (CLIR) supplementary service and in ITU-T Recommendations Q.731, clause 4, a so-called Malicious Call Identification (MCID) supplementary service for ISDN networks is described. The CLIR service allows for preventing the presentation of the ISDN number of the calling party to the called party. In this context, a further so-called Anonymous Call Rejection (ACR) service for the called party exists, that allows for rejection of anonymous telephone calls. The MCID service enables a user to request, that the source of an incoming call is identified and registered in the network.

The above described services are specified and applicable only for bearer related traffic in fixed (ISDN) networks. However, the short message service defined for mobile network as well as the short message service for fixed networks proposed above is bearer unrelated. The existing short message services, e.g. for the GSM does not include any service for the users to control the exchange of short messages. Especially a receiving user has to accept all short messages, if he subscribes to the SMS.

The object of the invention is to propose a method and network facilities to enable comprehensive user services for bearer unrelated communications.

This object is achieved by a method according to the teaching of claim 1, a short message server according to the teaching of claim 9 and a communications network according to the teaching of claim 10.

The main idea of the invention is to store a user service profile for the sending user or the receiving user in a server of an SMS centre, further referred to as short message server, that defines, how control information of the short message, e.g. address information or information about whether the calling user identification is restricted, destined to be forwarded to the receiving terminal has to be evaluated. On the base of the result of said evaluation, the kind of forwarding of said short message, i.e. rejection, unchanged forwarding or changed forwarding, is determined.

Further developments of the invention can be gathered from the dependent claims and the following description.

In the following the invention will be explained further making reference to the attached drawings in which:
- Fig.1a: schematically shows a communications network with a short message service centre according to the invention with two terminals according to the invention for carrying out a method for a treatment of short messages according to the invention,
- Fig.1b: schematically shows a communications network according to Fig.1 with a distributed short message service centre infrastructure,
- Fig.1c: schematically shows two different communications networks with each a short message service centre, both involved in the short message service handling,
- Fig.2a: shows an exemplary information exchange between terminals and short message service centres for a first service realisation of the invention,
- Fig.2b: shows a further exemplary information exchange between terminals and short message service centres for said first service realisation of the invention,
- Fig.3: shows an exemplary information exchange between terminals and short message service centres for a second service realisation of the invention,
- Fig.4a: shows an exemplary information exchange between terminals and short message service centres for a third service realisation of the invention,
- Fig.4b: shows a further exemplary information exchange between terminals and short message service centres for said third service realisation of the invention and
- Fig.5: shows an exemplary network protocol stack for transferring short messages.

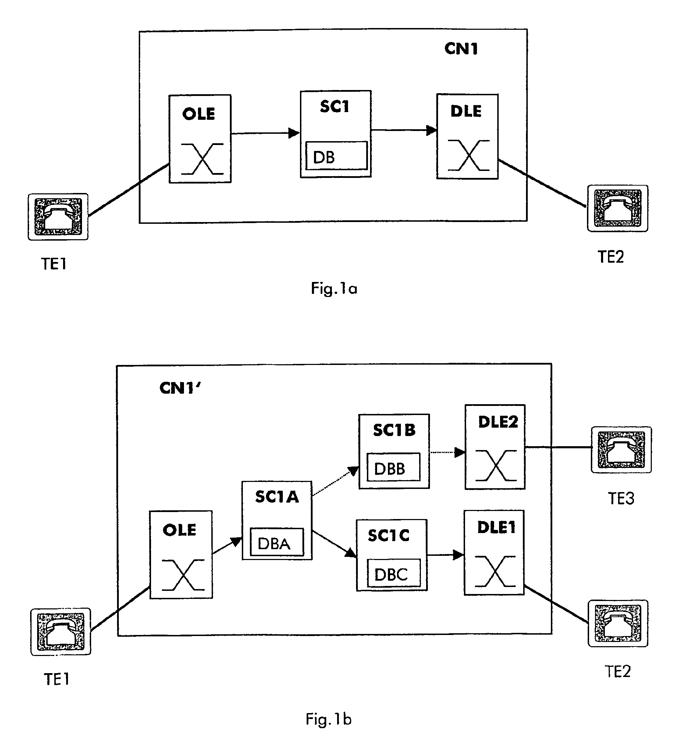

Fig.1a shows a first communications network CN1 comprising an originating local exchange OLE, a destination local exchange DLE and a first short message service centre SC1, further referred to as short message server SC1. Further, a first terminal TE1, sending or originating a short message and a second terminal TE2, receiving or terminating said short message are shown by way of example, connected to the originating local exchange OLE and to the destination local exchange DLE respectively. Arrows from the originating local exchange OLE to the first short message server SC1 and from said first short message server SC1 to the destination local exchange DLE symbolise a short message information flow. User service profile information for the sending first terminal TE1, further referred to as sending user profile and user service profile information for the receiving second terminal TE2, further referred to as sending user profile is stored in a service profile data base DB.

The fist communications network CN1 might be any mobile network, e.g. a GSM network, or a fixed digital telephone network, e.g. the ISDN as described before. In this example, said communications network has one short message service centre SC1 or short message server SC1 for relaying all short messages exchanged between sending users and a receiving users of said communications network CN1.

For providing personalised supplementary services on the base of the known short message service, user profiles are to be stored in the network. Said supplementary services might be either related to the sending user or to the receiving user. Thus, for each SMS subscriber, that is served by a short message server, a sending user profile and a receiving user profile may be stored in a corresponding data base DB of said short message server SC1 or accessible by said short message server SC1. Said stored user profiles defines the kind of forwarding of said short message. Three alternatives for said kind exist: The short message is to be forwarded without any address modification, the short message is to be forwarded with a network identification instead of the originating users identification or the short message is to be rejected.

In the example shown in Fig.1a, the shown communications network CN1 has one centralised short message service centre SC1 serving all terminals of said communications network. Thus, as long as the sending and the receiving user are subscribers of the same network, they are served by the same service centre SC1, having stored all corresponding user profiles. In the following, by way of example, a sequence of steps to be performed for delivering a short message in an ISDN with a central short message server SC1 is described:
- As known from the prior art, a sending user of a short message enters a short message into the sending terminal TE1 together with the address of the receiving terminal TE2 (called number) using the terminals keyboard.
- Pressing a specific key of said keyboard the short message is sent from the sending terminal TE1 to the originating local exchange OLE, that serves as an interworking interface for adaptation of the user signalling protocol to the network signalling protocol.
- Said short message is sent to the central short message server SC1, wherein said short message is handled according to the sending user profile, stored in the service profile data base DB.
- Further, said short message is handled according to the receiving user profile, stored in the same service profile data base DB.
- If the short message is to be delivered to the receiving terminal TE", i.e. if both user profile allows the forwarding of the short message information, said short message is sent to the corresponding destination local exchange DLE.
- Said destination local exchange DLE, as further interworking network node, delivers the short message using an appropriate protocol to the receiving user TE2.

Additionally, according to the prior art, the sending terminal TE1 may receive a return message back notifying, whether the short message has been delivered or not, if such a service is subscribed by said sending user. Then, the sending terminal might receive a first message to confirm, that the short message server SC1 has received the message. After a successful delivery of the short message to the receiving terminal TE2, a second message might be delivered to the sending terminal TE1. These automatically generated messages might comprise the data and time of the storage or the delivery.

Fig.1b shows an alternative first communications network CN1' as well comprising the originating local exchange OLE, to which the sending terminal T1 is connected to. Differently to Fig.1a, by way of example two destination local exchanges DLE1 and DLE2 are shown, each connected to the receiving second terminal T2 and a further receiving third terminal T3 respectively. Instead of one central short message server, a distributed service infrastructure with, by way of example, three regional short message servers SC1A, SC1B and SC1C are shown, serving each the first terminal TE1, the second terminal TE3 and the third terminal TE3 respectively. Short messages of the sending terminal T1, symbolised as arrow, are sent by the originating local exchange OLE to the corresponding -first regional short message server SC1A. Said short message server SC1A, depending on the destination terminal addresses, either forwards a short message to the second regional short message server SC1B or to the third regional short message server SC1C. The first regional short message server SC1A shows a first regional data base DBA, wherein the user profile of the first terminal TE1 is stored, the second regional short message server SC1B shows a second regional data base DBB, wherein the user profile of the second terminal TE1 is stored and the third regional short message server SC1C shows a third regional data base DBC, wherein the user profile of the third terminal TE3 is stored.

The described regional short message servers might be regional servers each serving defined regional parts (regions) of said communications network CN1'.
Alternatively, said short message servers might own to different competitor short message service providers. A sending user profile and a receiving user profile now may be provided in different short message servers.

According to the above described sequence for delivering a short message in an ISDN, the short message is first sent to the first regional short message server SC1A assigned to the sending terminal TE1. The regional short message server SC1A forwards or not forwards the short message according to the sending user service profile of the first user. Evaluating the destination address (second terminal TE2 or third terminal TE3) the short message, if to be forwarded, is forwarded to the second or third regional short message server SC1B or SC1C. Said second or third regional short message server SC1B or SC1C checks the corresponding receiving user profile and forwards said short message to corresponding first or second destination local exchange DLE1 or DLE2.

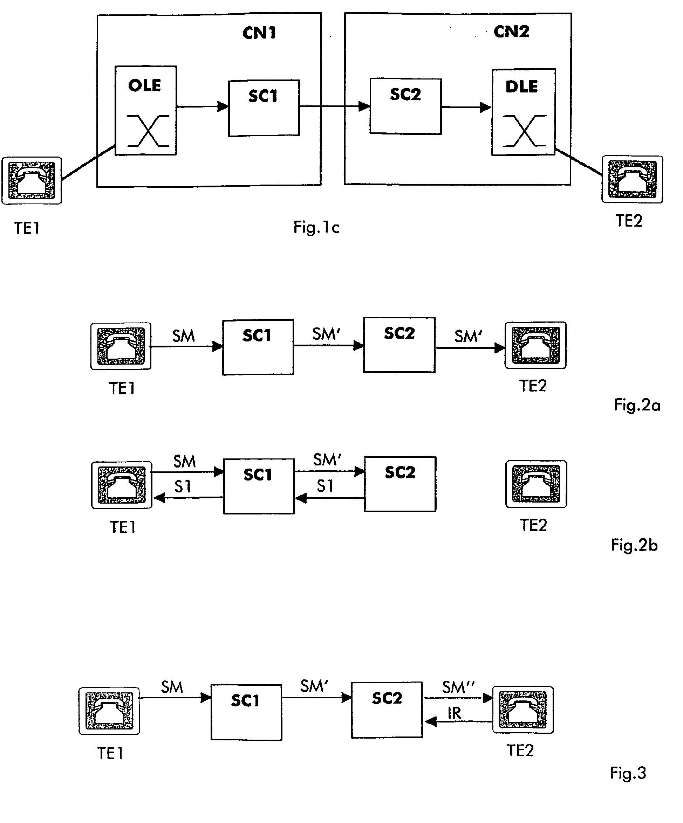

Fig.1c shows a further alternative, wherein the sending and the receiving user are served by different national or international short message service providers each located in different networks. By way of example, the first communications network CN1 with the originating local exchange OLE and the first short message server SC1, similar to Fig.1a, is shown. Further, a second communications network CN2 with a destination local exchange DLE and a second short message server SC2 is shown. Similar to Fig.1a, the sending first terminal TE1 is connected to the originating local exchange OLE and the receiving second terminal TE2 is connected to the destination local exchange DLE.

In the example now further described, the first communications network CN1 is a mobile network with one centralised short message service centre SC1 serving all terminals of said communications network and the second network is an ISDN network as described in the above examples. In the following, by way of example, a sequence of steps to be performed for delivering a short message send from a mobile network terminal TE1 to an ISDN terminal TE2 is described:
- The steps to be performed for sending a short message from the first terminal TE1 to the mobile network short message server SC1 are realised according to the GSM standards, not further described here.
- The short message to be forwarded or not is handled according to the stored sending user profile. If to be forwarded, said mobile network short message server SC1, analysing the destination phone number, forwards said short message to the corresponding central short message service centre SC2 of the ISDN.
- In said short message service centre SC2, a check of the receiving user profile is made.
- If said short message is to be forwarded, a mapping to the network signalling protocol of the ISDN is carried out and the short message is forwarded to the destination local exchange DLE.
- The destination local exchange DLE delivers the short message to the receiving user according to Fig.1a.

In the following, specific services based on the above described principles will be described. In this context, the following figures Fig.2a, Fig.2b, Fig3a, Fig.3b, Fig.4a and Fig.4b are shown for illustrating corresponding message flows between each the sending first terminal TE1 and the receiving second terminal TE2 of the above described terminals. By way of example, for all of said figures, each the sending terminal TE1 and the receiving terminal TE2 are served by different short message servers SC1 and SC2 respectively. The terminals TE1 and TE2 may be terminals of one communications network or may be terminals of different networks, wherein the short message servers SC1 and SC2 may be centralised service centres or servers of distributed service centres.

A sending user profile for serving the sending terminal TE1 is stored in a corresponding data base DB of the first short message server SC1 and a receiving user profile for serving the receiving second terminal is be stored in a corresponding data base of the second short message server SC2. Arrows symbolise messages exchanged between terminals and short message servers. A short message, according to the ETSI standard ETS 300 536 is regarded as consisting of text information and control information, wherein the control information comprises an originating address, a destination address and further information.

It may be needed to allow certain short message sending users that their identification is not made available to the receiving user. The originating service provider has to check whether the sending user falls in this category. If the sending user is allowed to do so, the service provider shall not reject the corresponding short messages, but shall deliver the short message to the destination user.

In this context, a supplementary service is proposed, that enables a receiving user to select, whether anonymous short messages should be generally rejected or generally forwarded. In order to avoid that the terminating short message server SC2 rejects the short message if the receiving user has subscribed to an anonymous forwarding service, the originating short message server SC1 has to send an additional indication in the SMS. Based on this additional information the terminating SMSC does not reject the SMS but delivers it to the receiving user.

Fig.2a and Fig.2b are shown for illustrating an exemplary message flow for said services.

Fig.2a shows a short message SM, that is sent from the first terminal TE1 to the first short message server SC1. It is assumed here, that the sending user has subscribed to a service for restricting the source identification of the originating terminal, i.e. for anonymously forwarding short messages. The short message server SC1 checks, whether the sending user has subscribed to a corresponding sending user identification restriction service. If yes, the first short message server SC1 forwards an indication, that said short message has to be delivered anonymously to the second terminal TE2 and sends a corresponding firstly modified short message SM' to the second short message server SC2. Said second short message server SC2 forwards said modified short message SM' to the second terminal TE2 with an empty originating address field. For the case, that the receiving user has subscribed to the anonymous short message rejection service, said message is dropped by the second short message server SC2 and an optionally first status message S1, shown in Fig.2b, comprising the information, that the short message was rejected is sent back from the second short message server over the first short message server SC1 to the first terminal TE1. The appropriate rejection information is defined in the SMS-ASE (SMS Application Service Element) protocol layer.

Usually, a received short message contains an identification of the sending user, which enables the receiver of a malicious SMS to take appropriate measures. However, as described above, an identification of the sending user may not be contained in the received malicious SMS. Even in this case, it should still be possible to identify the sender. Thus, a further proposed supplementary service in this context enables a receiving user to request, that the source of an incoming malicious anonymous short message is identified and registered in the network.

Thus, if a sending user requests that the presentation of his identification shall be restricted to the receiving user and if the receiving user has subscribed to malicious short message identification service, a special short message-ID is sent from the short message server serving the receiving user to said receiving user instead of the identification (served user number) of the sending user. The special short message-ID is part of the SMS-ASE and has to be mapped to the UNI (user network interface) protocol.

Fig.3a and Fig.3b are shown for illustrating an exemplary message flow for said services.

Fig.3 similarly to Fig.2a shows a short message SM, that is sent from the first terminal TE1 to the first short message server SC1. It is again assumed here, that the sending user has subscribed to a service for anonymously forwarding short messages. The first short message server SC1, after subscription check, again forwards an indication, that said short message has to be delivered anonymously to the second terminal TE2 and sends a corresponding firstly modified short message SM' to the second short message server SC2. Said short message server SC2 checks the receiving user profile, whether the receiving user has subscribed to the malicious short message identification service and, if yes, inserts a special short message-ID into the originating address field. This further modified short message SM'' is then sent to the second terminal TE2.

A further service proposed in the context of the invention offers a sending user the possibility to select certain destinations, that are exclusively allowed (white list) or to select certain destinations, that are not allowed (black list). A white list or a black list for a sending user might be useful to prevent potential users of the corresponding sending terminal (e.g. the children of a subscriber) to send short message to not selected addresses or to selected addresses respectively.

If the corresponding short message server SC1 serving the sending user receives a short message, it has to check the white list/black list associated to the sending user whether the indicated destination is allowed or not. If it is allowed then the SMS is forwarded towards the receiving user.

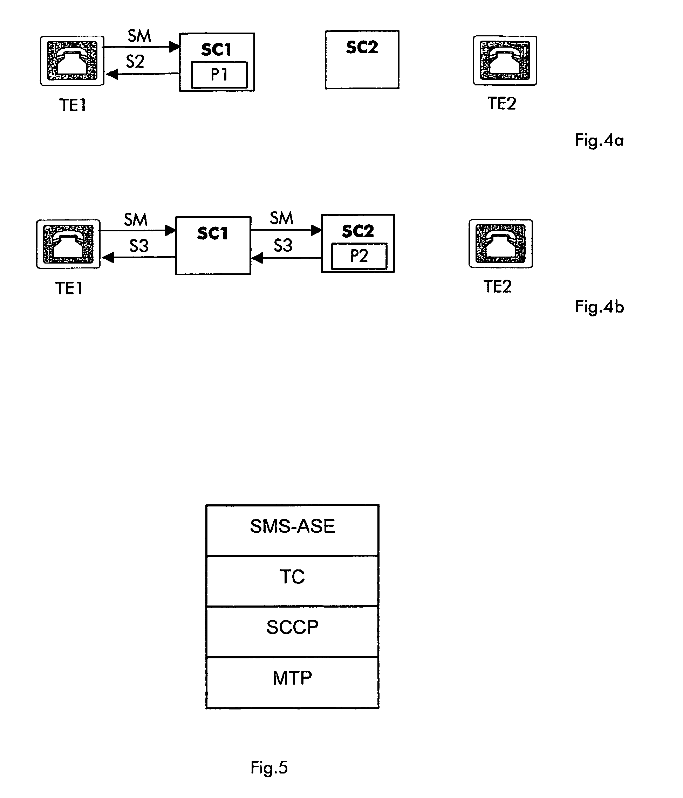

As example for message flows for a sending user white/black list service, Fig.4a shows the short message SM of the previous figures sent from the sending terminal TE1 to the first short message server SC1. A data base associated with said server stores a first service profile P1 for the sending user comprising said white list or black list with selected addresses. If the destination address of the short message is not stored on the white list (or stored on the black list), said message is rejected and, optionally, a second status message S2, comprising the information, that the short message was rejected by the sending users short message server SC1 is sent back from the second short message server to the first terminal TE1. The appropriate rejection information is defined in the SMS-ASE (SMS Application Service Element) protocol layer.

A similar service proposed in the context of the invention offers a receiving user the possibility to select certain origins, that are exclusively allowed (white list) or to select certain origins, that are not allowed (black list). If the short message server SC2 serving the receiving user receives a short message, it has to check the white list/black list associated to the receiving user, whether the indicated origin is allowed or not. If it is allowed then the SMS is forwarded towards the receiving user. If it is not allowed, the short message is not forwarded towards the receiving terminal TE2 but discarded. The sending terminal TE1 optionally receives an appropriate rejection indication.

As example for message flows for a receiving user white/black list service, Fig.4b again shows the short message SM sent from the sending terminal TE1 to the first short message server SC1. Analysing the destination address, said short message server SC1 forwards said short message SM to the short message server SC2 serving the receiving terminal TE2. A data base associated with said server stores a second service profile P2 for the receiving user comprising said white list or black list with selected addresses. If the origin address of the short message is not stored on the white list (or stored on the black list), said message is rejected and, optionally, a third status message S3, comprising the information, that the short message was rejected by the receiving users short message server SC2 is sent back from the second short message server over the first short message server SC1 to the first terminal TE1.

Fig.5 shows an exemplary network protocol stack for transferring short message service network protocol elements. The protocol stack shows four layers. An application network element layer ASE comprises a sub set of the mobile application part related to a short message service as known from the prior art. For the method according to the invention, additional application service elements are defined. Below said layer, as known from the prior art, a transaction capabilities layer TC, below a signalling connection control part layer SCCP and at the bottom, a message transfer part layer MTP is shown, that are known layers of the Signalling System No.7.

## Claims

1. A method for a treatment of short messages in a communications network (CN1, CN1', CN2), wherein at least one short message server (SC1, SC1A, SC1B, SC1C, SC2) controls the forwarding of a short message sent from a sending terminal (TE1) to a receiving terminal (TE2, TE3) over a signalling path, a user service profile for the sending user (P1) or the receiving user (P2) is stored in said at least one short message server (SC1, SC1A, SC1B, SC1C, SC2) that defines, how control information of the short message destined to be forwarded to the receiving terminal (TE2, TE3) has to be evaluated, and the kind of forwarding of said short message is determined depending on the evaluation result **characterized in, that** if the control information comprises an indication, that said short message has to be forwarded anonymously, a short message server (SC2) having stored a service profile (P2) for the receiving user (TE2)
- either forwards the short message inserting a short message identification instead of the sending terminal address into said control information, if said user service profile (P2) comprises an indication for malicious short message identification,
- or forwards the short message without the sending terminal address otherwise.

2. A method according to claim 1, **characterized in, that** if an anonymous short message is forwarded and if a request of the corresponding receiving terminal (TE2) for a malicious short message identification is received, a record of the short message with the corresponding sending terminal address is generated.

3. A method according to claim 1, **characterized in, that** a short message server (SC2) having stored a service profile (P2) for the receiving user (TE2)
- either blocks the forwarding of the short message, if said user service profile (P2) comprises an indication for anonymous short message rejection
- or forwards the short message otherwise.

4. A method according to claim 3, **characterized in, that** if a short message is to be rejected, a corresponding information is generated to be sent to the receiving terminal (TE2) or to the sending terminal (TE1).

5. A method according to claim 1, **characterized in, that** a short message server (SC1) having stored a sending user service profile (P1) with a white list containing selected receiving terminal addresses
- either blocks the forwarding of the short message, if said list does not contain the destination terminal addresses of the received short message
- or forwards the short message otherwise.

6. A method according to claim 1, **characterized in, that** a short message server (SC1) having stored a sending user service profile (P1) with a black list containing selected receiving terminal addresses
- either blocks the forwarding of the short message, if said list contains the destination terminal addresses of the received short message
- or forwards the short message otherwise.

7. A method according to claim 1, **characterized in, that** a short message server (SC2) having stored a receiving user service profile (P2) with a white list containing selected sending terminal addresses
- either blocks the forwarding of the short message, if said list does not contain the sending terminal addresses of the received short message
- or forwards the short message otherwise.

8. A method according to claim 1, **characterized in, that** a short message server (SC2) having stored a service profile (P2) with a black list containing selected sending terminal addresses
- either blocks the forwarding of the short message, if said list contains the sending terminal addresses of the received short message
- or forwards the short message otherwise.

9. A short message server (SC1, SC1A, SC1B, SC1C, SC2) for relaying short messages sent from a sending terminal (TE1) and destined for a receiving terminal (TE2, TE3), wherein user service profile storing means (DB, DBA, DBB, DBC) are comprised for storing definitions (P1, P2), how the control information of a received short message has to be evaluated and control information evaluating means are comprised, that are realised such, that the kind of forwarding of said short message is determined depending on the evaluation result **characterized in, that** said short message server (SC1, SC1A, SC1B, SC1C, SC2) comprises at least one processing means adapted to perform at least one of forwarding the short message by means of inserting a short message identification instead of the sending terminal address into said control information and forwarding the short message without the sending terminal address.

10. A communications network (CN1, CN1', CN2) for forwarding short messages sent from a sending terminal (TE1) and destined for a receiving terminal (TE2, TE3), **characterized in, that** at least one short message server (SC1) according to claim 9 is comprised.

## Patentansprüche

1. Ein Verfahren zur Verarbeitung von Kurznachrichten in einem Kommunikationsnetzwerk (CN1, CN1', CN2), wobei mindestens ein Kurznachrichten-Server (SC1, SC1A, SC1B, SC1C, SC2) das Übermitteln von Kurznachrichten, welche von einem Sendeterminal (TE1) über einen Signalisierungspfad an ein Empfangsterminal (TE2, TE3) übertragen werden, steuert, wobei ein Nutzerdienstprofil für den sendenden Nutzer (P1) oder den empfangenden Nutzer (P2) in dem besagten mindesten einen Kurznachrichten-Server (SC1, SC1A, SC1B, SC1C, SC2), welches definiert, wie Kontrolldaten der an das Empfangsterminal (TE2, TE3) zu sendenden Kurznachricht zu bewerten sind, gespeichert wird, und wobei die Übertragungsart der besagten Kurznachricht entsprechend dem Bewertungsergebnis bestimmt wird, **dadurch gekennzeichnet, dass**, wenn die Kontrolldaten eine Angabe enthalten, dass die besagte Kurznachricht anonym zu versenden ist, ein Kurznachrlchten-Server (SC2), welcher ein Dienstprofil (P2) für den Empfangsnutzer (TE2) gespeichert hat,
- entweder die Kurznachricht unter Einfügen einer Kurznachricht-Identifikation anstatt der Adresse des sendenden Terminals in die besagten Kontrolldaten, wenn das besagte Profil der Nutzerterminals (P2) einen Hinweis auf eine böswillige Kurznachricht-Identifikation enthält, überträgt,
- oder anderenfalls die Kurznachricht ohne die Sendeterminal-Adresse überträgt.

2. Ein Verfahren nach Anspruch 1, **dadurch gekennzeichnet, dass**, wenn eine anonyme Kurznachricht übertragen wird und wenn eine Anfrage des entsprechenden Empfangsterminals (TE2) für eine böswillige Kurznachricht-Identifikation empfangen wird, ein Verzeichnis der Kurznachricht mit der entsprechenden Sendeterminal-Adresse erzeugt wird.

3. Ein Verfahren nach Anspruch 1, **dadurch gekennzeichnet, dass** ein Kurznachrichten-Server (SC2), welcher ein Dienstprofil (P2) für den empfangenden Nutzer (TE2) gespeichert hat,
- entweder die Übertragung der Kurznachricht blockiert, wenn das besagte Nutzerdienstprofil (P2) einen Hinweis auf die Zurückweisung einer anonymen Kurznachricht enthält,
- oder anderenfalls die Kurznachricht überträgt.

4. Ein Verfahren nach Anspruch 3, **dadurch gekennzeichnet, dass**, wenn eine Kurznachricht zurückzuweisen ist, eine entsprechende, an das Empfangsterminal (TE2) oder an das Sendeterminal (TE1) zu sendende Information erzeugt wird.

5. Ein Verfahren nach Anspruch 1, **dadurch gekennzeichnet, dass** ein Kurznachrichten-Server (SC1), welcher ein Dienstprofil (P1) eines sendenden Nutzers mit einer weißen Liste, die ausgewählte Adressen des sendenden Terminals enthält, gespeichert hat,
- entweder die Übertragung der Kurznachricht blockiert, wenn die besagte Liste nicht die Adressen des empfangenden Terminals der empfangenen Kurznachricht enthält,
- oder anderenfalls die Kurznachricht überträgt.

6. Ein Verfahren nach Anspruch 1, **dadurch gekennzeichnet, dass** ein Kurznachrichten-Server (SC1), welcher ein Dienstprofil (P1) eines sendenden Nutzers mit einer schwarzen Liste, die ausgewählte Adressen des sendenden Terminals enthält, gespeichert hat,
- entweder die Übertragung der Kurznachricht blockiert, wenn die besagte Liste die Adressen des empfangenden Terminals der empfangenen Kurznachricht enthält,
- oder anderenfalls die Kurznachricht überträgt.

7. Ein Verfahren nach Anspruch 1, **dadurch gekennzeichnet, dass** ein Kurznachrichten-Server (SC2), welcher ein Dienstprofil (P2) eines empfangenden Nutzers mit einer weißen Liste, die ausgewählte Adressen des sendenden Terminals enthält, gespeichert hat,
- entweder die Übertragung der Kurznachricht blockiert, wenn die besagte Liste nicht die Adressen des empfangenden Terminals der empfangenen Kurznachricht enthält,
- oder anderenfalls die Kurznachricht überträgt.

8. Ein Verfahren nach Anspruch 1, **dadurch gekennzeichnet, dass** ein Kurznachrichten-Server (SC2), welcher ein Dienstprofil (P2) mit einer schwarzen Liste, die ausgewählte Adressen des sendenden Terminals enthält, gespeichert hat,
- entweder die Übertragung der Kurznachricht blockiert, wenn die besagte Liste die Adressen des empfangenden Terminals der empfangenen Kurznachricht enthält,
- oder anderenfalls die Kurznachricht überträgt.

9. Ein Kurznachrichten-Server (SC1, SC1A, SC1B, SC1C, SC2) zur Weitergabe von Kurznachrichten, welche von einem Sendeterminal (TE1) an ein Empfangsterminal (TE2, TE3) gesendet werden, wobei Nutzerdienst-Profil-Speichermlttel (DB, DBA, DBB, DBC) zum Speichern von Definitionen (P1, P2), wie Steuerinformationen einer empfangenen Kurznachricht zu bewerten sind, sowie Mittel zur Bewertung von Kontrolldaten enthalten sind, welche so ausgelegt sind, dass die Übertragungsart der besagten Kurznachricht abhängig vom Bewertungsergebnis bestimmt wird, **dadurch gekennzeichnet, dass** der besagte Kurznachrichten-Server (SC1, SC1A, SC1B, SC1C, SC2) mindestens ein Verarbeitungsmittel umfasst, welches fähig ist, mindestens eine der Übertragung von Kurznachrichten durch Einfügen einer Kurznachricht-Identifikation anstatt der Adresse des Sendeterminals in die besagten Kontrolldaten und Übertragen der Kurznachricht ohne die Adresse des Sendeterminals, auszuführen.

10. Ein Kommunikationsnetzwerk (CN1, CN1', CN2) zum Übertragen von Kurznachrichten, welche von einem Sendeterminal (TE1) an ein Empfangsterminal (TE2, TE3) gesendet werden, **dadurch gekennzeichnet, dass** es mindestens einen Kurznachrichten-Server (SC1) nach Anspruch 9 umfasst.

## Revendications

1. Procédé pour un traitement des messages courts dans un réseau de communication (CN1, CN1', CN2), au moins un serveur de messages courts (SC1, SC1A, SC1B, SC1C, SC2) commandant le transfert d'un message court envoyé depuis un terminal émetteur (TE1) vers un terminal destinataire (TE2, TE3) sur un trajet de signalisation, un profil de service d'abonné pour l'abonné émetteur (P1) ou l'abonné destinataire (P2) étant stocké dans ledit au moins un serveur de messages courts (SC1, SC1A, SC1B, SC1C, SC2), lequel définit comment doivent être évaluées les informations de commande du message court destiné à être transféré au terminal destinataire (TE2, TE3) et le type de transfert dudit message court étant déterminé en fonction du résultat de l'évaluation, **caractérisé en ce que** si les informations de commande comprennent une Indication selon laquelle ledit message court doit être transféré anonymement, un serveur de messages courts (SC2) dans lequel est stocké un profil de service (P2) pour l'abonné destinataire (TE2)
- soit transfère le message court en insérant une identification de message court à la place de l'adresse du terminal émetteur dans lesdites informations de commande si ledit profil de service d'abonné (P2) comprend une indication pour l'identification des messages courts malveillants,
- soit, dans les autres cas, transfère le message court sans l'adresse du terminal émetteur.

2. Procédé selon la revendication 1, **caractérisé en ce que** si un message court anonyme est transféré et si une demande d'identification de message court malveillant est reçue de la part du terminal destinataire (TE2) correspondant, un enregistrement du message court avec l'adresse du terminal émetteur correspondant est généré.

3. Procédé selon la revendication 1, **caractérisé en ce qu'**un serveur de messages courts (SC2) dans lequel est stocké un profil de service (P2) pour l'abonné destinataire (TE2)
- soit bloque le transfert du message court si ledit profil de service d'abonné (P2) comprend une indication de refus de message court anonyme,
- soit, dans les autres cas, transfère le message court.

4. Procédé selon la revendication 3, **caractérisé en ce que** si un message court doit être refusé, une information correspondante est générée pour être envoyée au terminal destinataire (TE2) ou au terminal émetteur (TE1).

5. Procédé selon la revendication 1, **caractérisé en ce qu'**un serveur de messages courts (SC1) dans lequel est stocké un profil de service d'abonné émetteur (P1) avec une liste blanche contenant les adresses des terminaux destinataires choisis
- soit bloque le transfert du message court si ladite liste ne contient pas les adresses des terminaux destinataires du message court reçu,
- soit, dans les autres cas, transfère le message court.

6. Procédé selon la revendication 1, **caractérisé en ce qu'**un serveur de messages courts (SC1) dans lequel est stocké un profil de service d'abonné émetteur (P1) avec une liste noire contenant les adresses des terminaux destinataires choisis
- soit bloque le transfert du message court si ladite liste contient les adresses des terminaux destinataires du message court reçu,
- soit, dans les autres cas, transfère le message court.

7. Procédé selon la revendication 1, **caractérisé en ce qu'**un serveur de messages courts (SC2) dans lequel est stocké un profil de service d'abonné destinataire (P2) avec une liste blanche contenant les adresses des terminaux émetteurs choisis
- soit bloque le transfert du message court si ladite liste ne contient pas les adresses des terminaux émetteurs du message court reçu,
- soit, dans les autres cas, transfère le message court.

8. Procédé selon la revendication 1. **caractérisé en ce qu'**un serveur de messages courts (SC2) dans lequel est stocké un profil de service (P2) avec une liste noire contenant les adresses des terminaux émetteurs choisis
- soit bloque le transfert du message court si ladite liste contient les adresses des terminaux émetteurs du message court reçu,
- soit, dans les autres cas, transfère le message court.

9. Serveur de messages courts (SC1, SC1A, SC1B, SC1C, SC2) pour relayer les messages courts envoyés depuis un terminal émetteur (TE1) et destinés à un terminal destinataire (TE2, TE3), des moyens de stockage de profil d'abonné (DB, DBA, DBB, DBC) étant compris pour stocker des définitions (P1, P2) sur la manière dont doivent être évaluées les informations de commande d'un message court reçu, lesquels sont réalisés de telle sorte que le type de transfert dudit message court est déterminé en fonction du résultat de l'évaluation, **caractérisé en ce que** ledit serveur de messages courts (SC1, SC1A, SC1B, SC1C, SC2) comprend au moins un moyen de traitement conçu pour effectuer au moins le transfert du message court en insérant une identification de message court à la place de l'adresse du terminal émetteur dans lesdites informations de commande ou le transfert du message court sans l'adresse du terminal émetteur.

10. Réseau de communication (CN1, CN1', CN2) pour transférer les messages courts envoyés depuis un terminal émetteur (TE1) et destinés à un terminal destinataire (TE2, TE3), **caractérisé en ce qu'**il comprend au moins un serveur de messages courts (SC1) selon la revendication 9.
